# EUROPEAN PATENT APPLICATION

(11) **EP 4 711 171 A1**
(43) Date of publication of application: **18.03.2026**
(21) Application number: 24836188.3
(22) Date of filing: 21.05.2024
(51) Int. Cl.: B60K 35/00, G06F 3/01, G06F 3/0484, B60K 35/85, B60K 35/81, B60K 35/29, B60K 35/23, B60K 35/60

(54) **CONTENT OUTPUT DEVICE, CONTENT OUTPUT SYSTEM COMPRISNG SAME, AND OPERATION METHOD THEREOF**

(30) Priority: 04.07.2023 KR 20230086311; 14.08.2023 KR 20230106334
(71) Applicant: Samsung Electronics Co., Ltd., Suwon-si, Gyeonggi-do 16677 (KR)
(72) Inventor: AHN, Hyoin, Suwon-si Gyeonggi-do 16677 (KR); KIM, Jeongseob, Suwon-si Gyeonggi-do 16677 (KR); LEE, Seungjoon, Suwon-si Gyeonggi-do 16677 (KR); KIM, Dohyoung, Suwon-si Gyeonggi-do 16677 (KR); MOON, Choonkyoung, Suwon-si Gyeonggi-do 16677 (KR); LIM, Yongjun, Suwon-si Gyeonggi-do 16677 (KR); KIM, Kyusung, Suwon-si Gyeonggi-do 16677 (KR); CHAI, Kibyung, Suwon-si Gyeonggi-do 16677 (KR)
(74) Representative: Appleyard Lees IP LLP
(86) International application number: PCT/KR2024/006840
(87) International publication number: WO 2025/009739

(57) **Abstract**

An electronic device according to various embodiments may include a communication circuit that establishes communication with an external device, a sensor that obtains gaze information of an occupant, a display, and a processor operatively connected with the communication circuit, the sensor, and the display. The processor displays a screen including driving information on the display based on obtaining the driving information associated with a vehicle, displays an indicator associated with a notification received from the external device, on a specified area of the display, when the gaze information obtained based on the sensor corresponds to a line of sight gazing at the specified area, determines a display method of a content corresponding to the notification based on the driving information, and displays the content on the display device based on the determined display method.

## Description

### [Technical Field]

The disclosure relates to controlling content being displayed, more particularly, relates to a content output device, a content output system including the same, and an operating method thereof.

### [Background Art]

An electronic device may be divided into a mobile/portable terminal or a stationary terminal depending on whether it is movable. Furthermore, the mobile/portable terminal may be divided into a handheld terminal or a vehicle mount terminal depending on whether it is able to be directly carried by a user.

Such an electronic device may interwork with an external device to transmit and receive various pieces of content.

### [Disclosure]

### [Technical Solution]

The above-mentioned electronic device may display the various pieces of content provided from the external device on a vehicle (e.g., a display provided in the vehicle).

For example, the electronic device may display the same screen as a screen output from the interworking external device on the vehicle.

For another example, the electronic device may notify an event occurring in the external device via the vehicle. Thus, an occupant (e.g., a driver and/or a passenger) of the vehicle may recognize an event occurring in the external device based on the notification outputted via the vehicle.

However, the content displayed on the vehicle may distract the attention of the driver to cause a risk of an accident.

Accordingly, an aspect of the disclosure is to provide an electronic device for displaying various pieces of content on a vehicle while reducing an accident risk of the driver.

In accordance with an aspect of the disclosure, an electronic device may include a communication circuit that establishes communication with an external device, a sensor that obtains gaze information of an occupant, a display device, and a processor operatively connected with the communication circuit, the sensor, and the display device. The processor may display a screen including driving information associated with a vehicle on the display device based on obtaining the driving information, may display an indicator associated with a notification received from the external device, on a specified area of the display device, when the gaze information obtained based on the sensor corresponds to a line of sight gazing at the specified area of the display device, may determine a display method of a content corresponding to the notification based on the driving information, and display the content on the display device based on the determined display method.

In accordance with another aspect of the disclosure, an operating method of an electronic device may include displaying a screen including driving information associated with a vehicle on a display device of the electronic device based on obtaining the driving information, displaying an indicator associated with a notification received from an external device on a specified area of the display device, when gaze information obtained based on a sensor of the electronic device corresponds to a line of sight gazing at the specified area of the display device, determining a display method of a content corresponding to the notification based on the driving information, and displaying the content on the display device based on the determined display method.

### [Advantageous Effects]

The electronic device according to various embodiments disclosed in the disclosure may make output schemes of content different from each other, based on a driving state of a vehicle, in displaying the content on a display provided in the vehicle, thus preventing attention of a driver from focusing on the display of the vehicle.

Furthermore, the electronic device according to various embodiments may display content such that the driver pays attention to driving, thus reducing an accident risk of the driver.

Effects capable of being obtained from the disclosure are not limited to the effects described above.

### [Description of Drawings]

FIG. 1 is a block diagram of an electronic device in a network environment according to various embodiments;
FIG. 2 is a drawing schematically illustrating a configuration of a content output system according to various embodiments;
FIG. 3A is a drawing illustrating a configuration of an electronic device according to various embodiments;
FIGS. 3B, 3C, 3D, and 3E are drawings for describing a display module according to various embodiments;
FIGS. 4A, 4B, and 4C are drawings for describing content displayed on a display module according to various embodiments;
FIGS. 5A and 5B are drawings for describing an operation of making output schemes of content different from each other depending on a driving state of a vehicle in an electronic device according to various embodiments;
FIG. 6A is a drawing for describing an indicator for providing a notification of reception of content according to various embodiments;
FIGS. 6B and 6C are drawings for describing an operation of generating content according to various embodiments;
FIG. 7 is a drawing for describing an indicator with a different attribute according to various embodiments;
FIG. 8 is a drawing for describing a content layer with a different attribute according to various embodiments of the present disclosure;
FIG. 9 is a drawing for describing an operation of displaying content associated with receiving a video call in an electronic device according to various embodiments;
FIG. 10 is a drawing for describing an operation of displaying content associated with performing a video call in an electronic device according to various embodiments;
FIG. 11 is a drawing for describing an operation of displaying content associated with an execution screen of a map application in an electronic device according to various embodiments;
FIG. 12 is a drawing for describing an operation of displaying content associated with traffic information in an electronic device according to various embodiments;
FIG. 13 is a flowchart for describing an operation of displaying content in an electronic device according to various embodiments;
FIG. 14A is a drawing illustrating an operating method of a content output system according to various embodiments; and
FIG. 14B is a drawing illustrating another operating method of a content output system according to various embodiments.

With regard to description of drawings, the same or similar components will be marked by the same or similar reference signs.

### [Mode for Invention]

Hereinafter, various embodiments of the disclosure may be described with reference to accompanying drawings. Accordingly, those of ordinary skill in the art will recognize that modification, equivalent, and/or alternative on the various embodiments described herein may be variously made without departing from the scope and spirit of the disclosure. With regard to description of drawings, similar components may be marked by similar reference numerals.

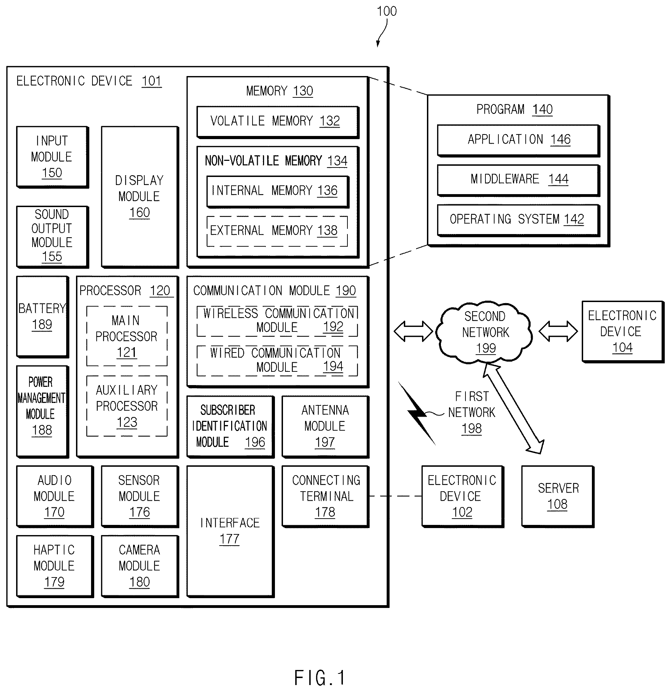

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The electronic device 101 according to various embodiments may interwork with an external device (e.g., the electronic device 102, the electronic device 104, or the server 108) to transmit and receive various pieces of content. According to an embodiment, an electronic device 220 may be implemented to control at least some components (e.g., a display module) of a vehicle 210. Furthermore, the electronic device 101 may display various pieces of content provided from the external device on the display module provided in the vehicle.

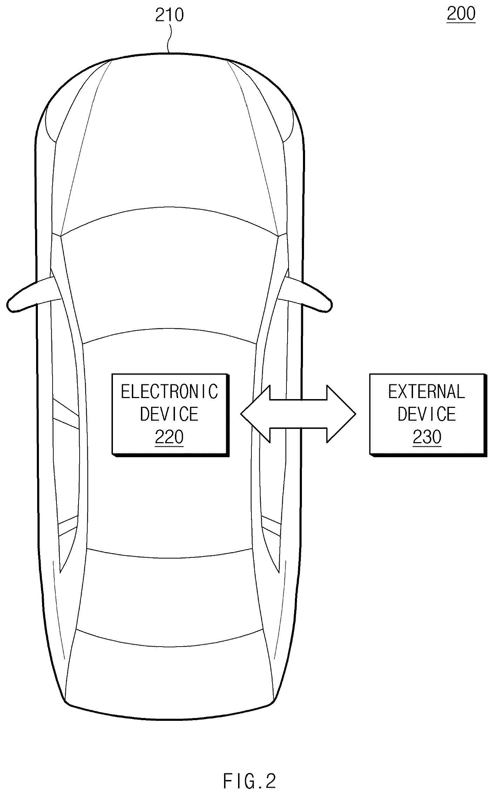

Various embodiments described based on FIGS 2 to 14B below may be associated with displaying content on the display module provided in the vehicle. At least one of the embodiments described based on FIGS. 2 to 14B may be combined with another embodiment.

FIG. 2 is a drawing schematically illustrating a configuration of a content output system 200 according to various embodiments.

Referring to FIG. 2, the content output system 200 according to various embodiments may be composed of an electronic device 220 and an external device 230. According to an embodiment, the electronic device 220 and the external device 230 may communicate with each other over a network (e.g., a wireless communication network).

According to an embodiment, at least some components of the electronic device 220 may be integrated into a component of a vehicle 210 or may be implemented as components independent of each other. Furthermore, the external device 230 may be disposed (or mounted) inside the vehicle 210 or may be disposed outside the vehicle 210. According to an embodiment, each of the electronic device 220 and the external device 230 may be an electronic device 101 of FIG. 1 and may be implemented as at least some of the components described based on FIG. 1.

According to various embodiments, the electronic device 220 may display various pieces of information on the vehicle 210. For example, the electronic device 220 may display at least some of the various pieces of information on a display module provided in the vehicle 210.

According to an embodiment, the various pieces of information displayed on the vehicle 210 may include information associated with driving (e.g., operation) of the vehicle 210 and/or information associated with a state of the vehicle 210.

For example, the information associated with the driving of the vehicle 210 may be associated with at least one of a driving speed of the vehicle 210, a mileage (e.g., an accumulated mileage and/or a drivable distance) of the vehicle 210, driving fuel consumption of the vehicle 210, a driving time of the vehicle 210, or a location of the vehicle 210.

Furthermore, the information associated with the state of the vehicle 210 may be associated with at least one of a remaining amount of fuel, revolutions per minute of an engine, a temperature of a coolant, or an operation state for a component (e.g., the engine, a brake, an airbag, a seat belt, an anti-lock brake system (ABS), a traction control system (TCS), and/or a tire) in the vehicle 210. The above-mentioned various pieces of information displayed on the vehicle 210 are according to an embodiment and various embodiments are not limited thereto. Furthermore, according to an embodiment, the electronic device 220 may obtain at least some of the above-mentioned various pieces of information via at least some components of the vehicle 210, which are connected with each other via wired or wireless communication. According to an embodiment, the electronic device 220 may directly collect the at least some of the various pieces of information.

According to an embodiment, the various pieces of information displayed on the vehicle 210 may include content provided from the external device 230. According to an embodiment, the various pieces of information displayed on the vehicle 210 may include content associated with an event occurring in the external device 230. For example, the content may include at least one of image data, text data, video data, audio data, or symbol data.

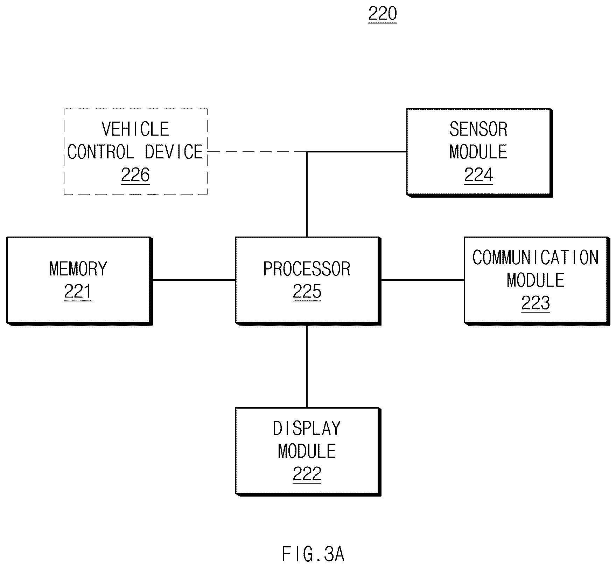

However, the content displayed on the vehicle 210 may distract the attention of a driver to cause the risk of an accident. The electronic device 220 according to various embodiments may make output schemes of content based on the driving state of the vehicle 210 to prevent the attention of the driver from focusing on the display of the vehicle 210. A detailed configuration of the electronic device 220, which is associated with it, will be described in detail below with reference to FIG. 3A.

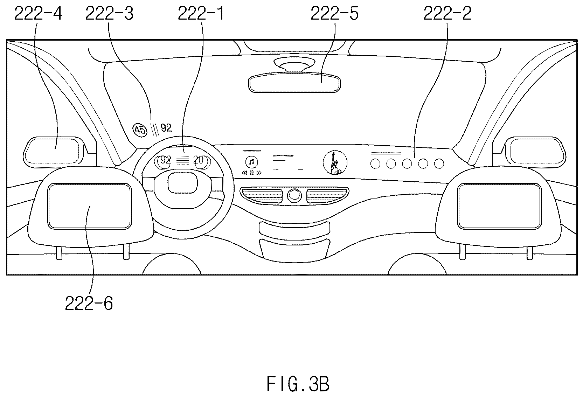

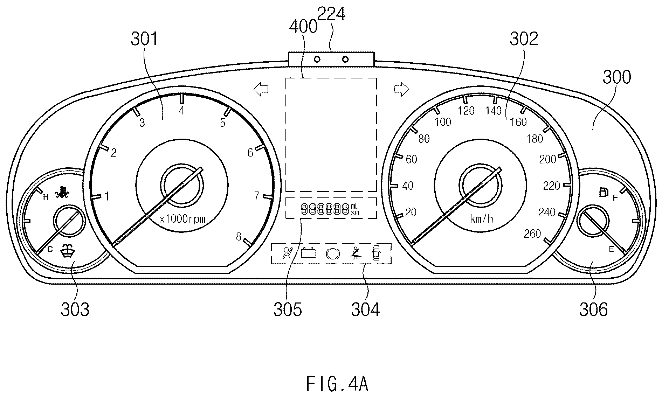

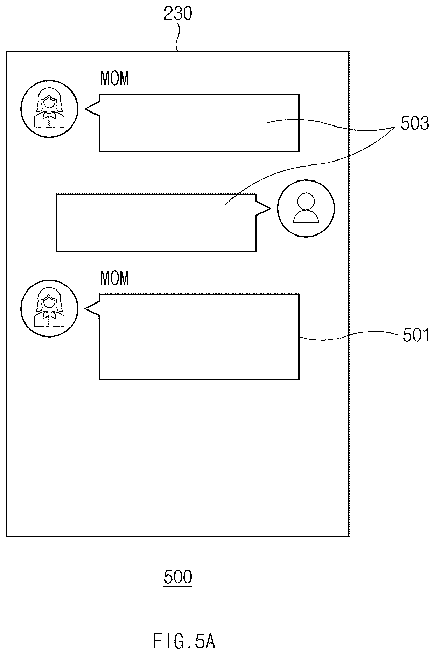

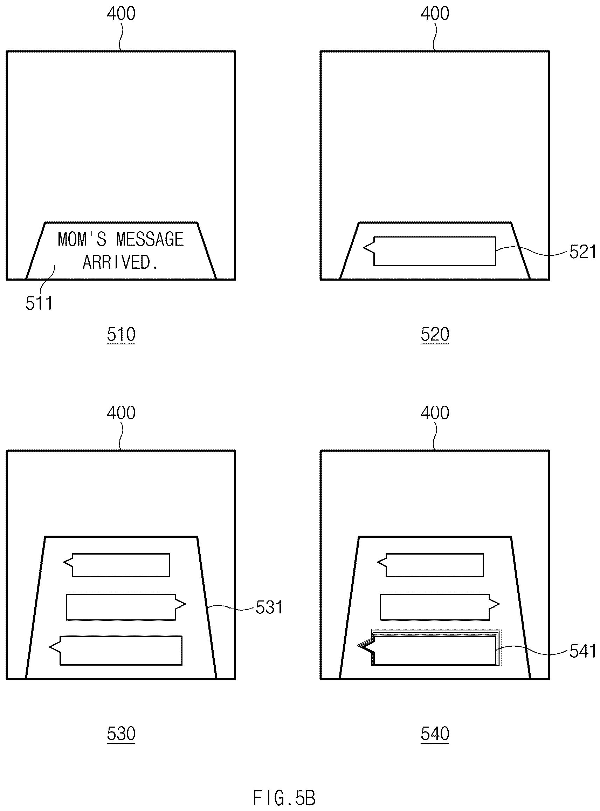

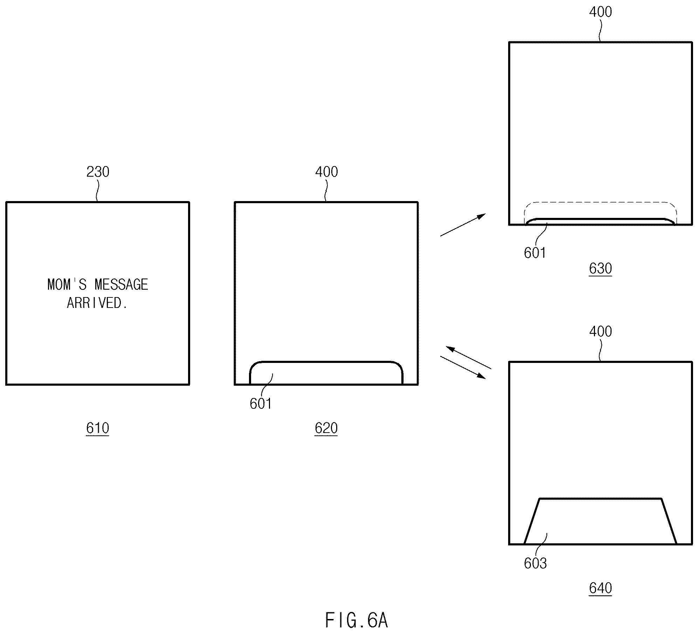

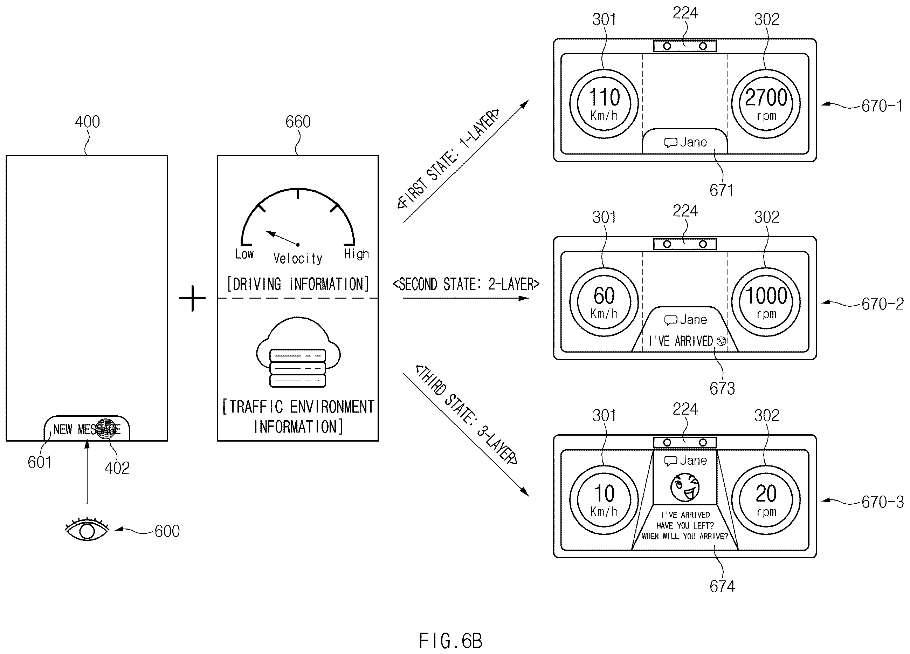

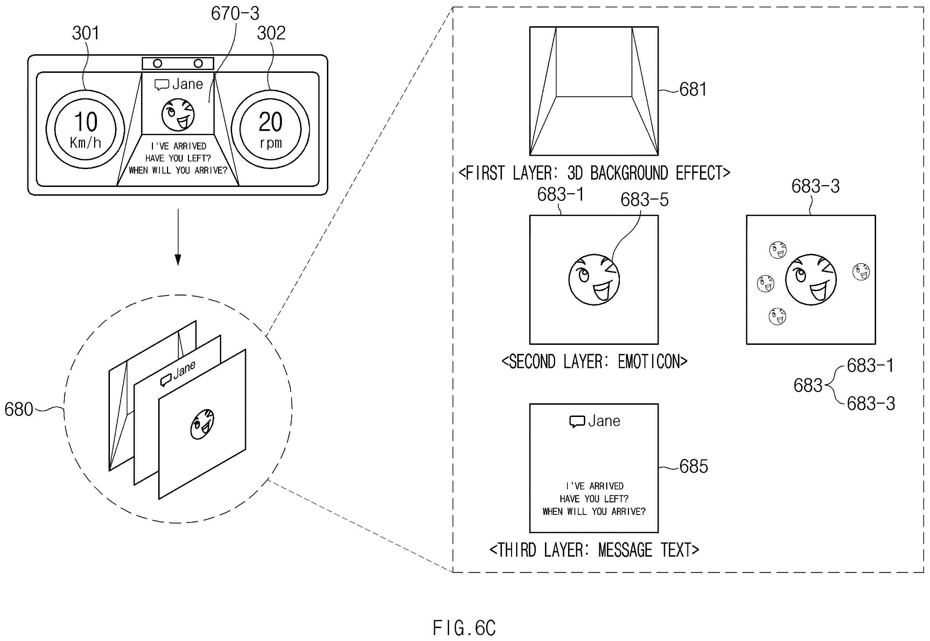

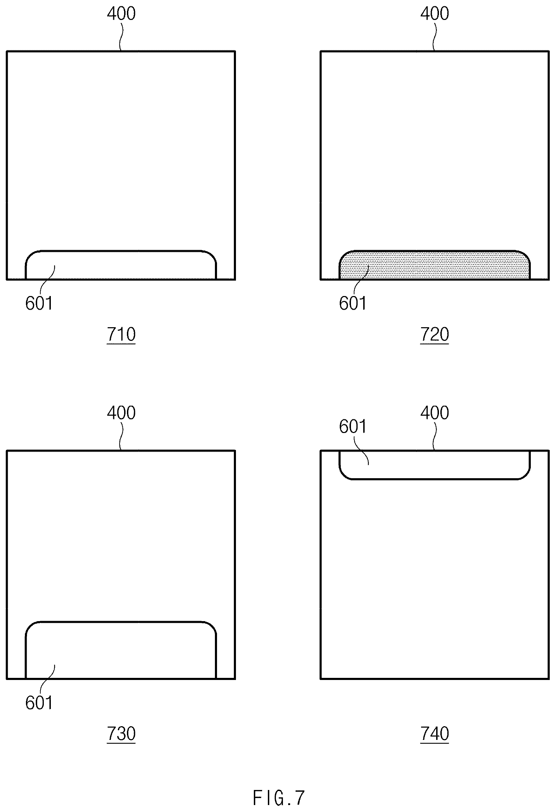

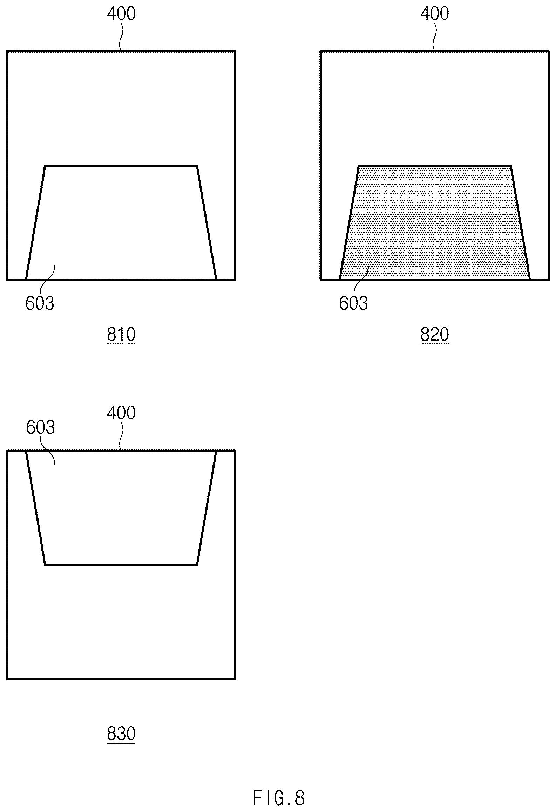

FIG. 3A is a drawing illustrating a configuration of an electronic device 220 according to various embodiments. FIGS. 3B to 3E are drawings for describing a display module according to various embodiments. FIGS. 4A to 4C are drawings for describing content displayed on a display module according to various embodiments. FIGS. 5A and 5B are drawings for describing an operation of making output schemes of content different from each other depending on a driving state of a vehicle 210 in an electronic device 220 according to various embodiments. Furthermore, FIG. 6A is a drawing for describing an indicator for providing a notification of reception of content according to various embodiments. FIGS. 6B and 6C are drawings for describing an operation of generating content according to various embodiments. FIG. 7 is a drawing for describing an indicator with a different attribute according to various embodiments. FIG. 8 is a drawing for describing a content layer with a different attribute according to various embodiments of the present disclosure.

Referring to FIG. 3A, the electronic device 220 (e.g., an electronic device 101) according to various embodiments may include a memory 221 (e.g., a memory 130), a display module 222 (e.g., a display module 160), a communication module 223 (e.g., a communication module 190), a sensor module 224 (e.g., a sensor module 176), a processor 225 (e.g., a processor 120), and a vehicle control device 226.

However, this is merely illustrative and various embodiments are not limited thereto. For example, at least one (e.g., the vehicle control device 226) of the components of the electronic device 220 according to various embodiments may be omitted or at least one other component (e.g., an input module (e.g., an input module 150) and/or a power management module (e.g., a power management module 188)) may be added as a configuration of the electronic device 220. Furthermore, at least one of the above-mentioned components may be integrated with another component.

According to various embodiments, the memory 221 may include a program, an algorithm, a routine, and/or an instruction associated with an operation (or control) of the electronic device 220. According to an embodiment, the memory 221 may store at least one piece of content. For example, the at least one piece of content may be generated by the electronic device 220 or may be provided from an external device 230 (e.g., an electronic device 102, an electronic device 104, or a server 108).

According to various embodiments, the display module 222 (e.g., a display or a display device) may display various pieces of information based on control of the processor 225. At least some of the various pieces of information may include information associated with driving of the vehicle 210 and/or information associated with a state of the vehicle 210.

According to an embodiment, the display module 222 may be provided in the vehicle 210. For example, as shown in FIG. 3B, the display module 222 may include a cluster 222-1 located on a dashboard and configured to output various pieces of information to a driver. In this case, the driver may identify the various pieces of information displayed on the cluster 222-1 while maintaining his or her line of sight in front of the vehicle 210.

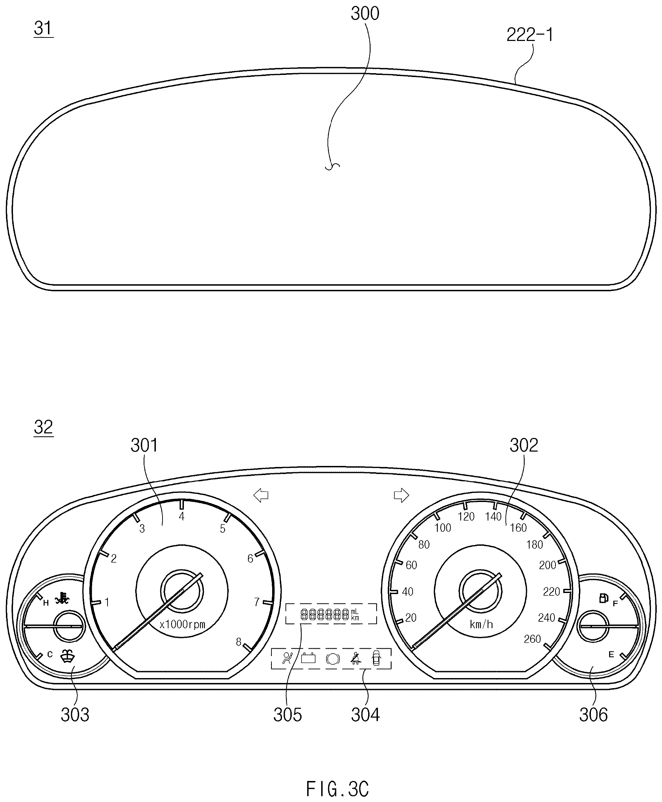

According to an embodiment, the cluster 222-1 may be implemented in a digital scheme. As shown in FIG. 3C, the cluster 222-1 implemented in the digital scheme may be configured as a display 300 with a relatively large output area. When power is not supplied to the cluster 222-1 of such a digital scheme (e.g., when the vehicle 210 is ignition off), any information may fail to be displayed on the display 300 of the cluster 222-1 as shown in 31 of FIG. 3C. Furthermore, when power is supplied to the cluster 222-1 (e.g., when the vehicle 210 is ignition on), as shown in 32 of FIG. 3C, information associated with driving of the vehicle 210 and/or a state of the vehicle 210, such as engine RPM information 301, driving speed information 302, temperature (e.g., coolant temperature) information 303, warning information 304 (e.g., an airbag error warning, a seat belt wearing warning, a battery discharging warning, an engine warning, a door opening warning, or the like), mileage information 305 (e.g., an accumulated mileage, a drivable distance, or the like), and/or fuel information 306, may be displayed on the display 300 of the cluster 222-1.

Additionally or alternatively, the display module 222 (e.g., the cluster 222-1) may be configured to provide at least some of the various pieces of information as 3-dimensional information.

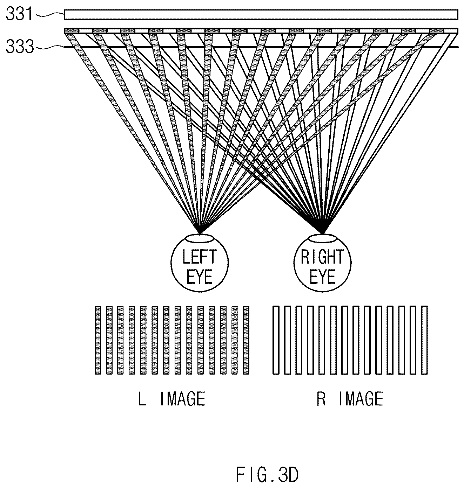

In this regard, as shown in FIG. 3D, the electronic device 220 may include a display panel 331 and a barrier panel 333. According to an embodiment, the display panel 331 may display 2-dimensional information and/or 3-dimensional information. The 3-dimensional information may include a left-eye image and a right-eye image. That is, the display panel 331 may alternately arrange and display the left-eye image and the right-eye image. For example, the display panel 331 may display the left-eye image on an odd-numbered pixel and may display the right-eye image on an even-numbered pixel.

According to an embodiment, the barrier panel 333 may be disposed to be overlaid on a front of the display 331 and may include a barrier capable of blocking the left-eye image and the right-eye image displayed on the display panel 331. That is, the barrier may include a diaphragm in which slits at a certain interval are formed. Such barriers may implement a stereoscopic image such that the left-eye image and the right-eye image are separated and recognized on the left eye and the right eye of the driver, respectively.

According to an embodiment, the barrier panel 333 may be controller based on a line of sight of the driver or motion of a face of the driver. For example, a position and/or a size of the barrier (e.g., the slit) may be controlled based on the line of sight of the driver or the motion of the face of the driver.

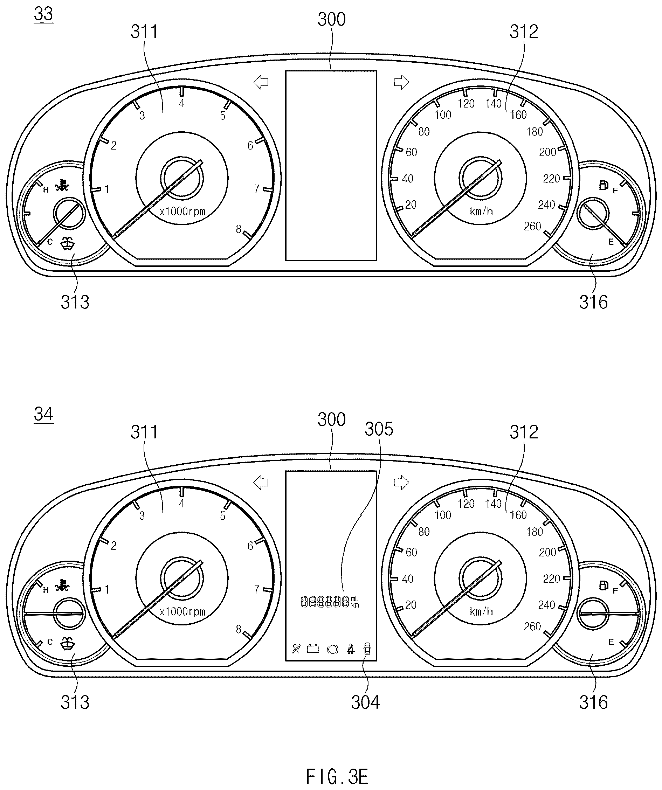

However, this is only one of various embodiments and embodiments below are not limited thereto. For example, the cluster 222-1 according to various embodiments may be implemented in an analog scheme for displaying at least some pieces of information in the analog scheme (or a hybrid scheme in which the analog scheme and a digital scheme are mixed with each other). As shown in FIG. 3E, the cluster implemented in the analog scheme may be composed of the display 300 with a relatively small area and a mechanical gauge (e.g., an engine RPM gauge 311, a driving speed gauge 312, a temperature gauge 313, and/or a fuel gauge 316) indicating information associated with driving of the vehicle 210 and/or a state of the vehicle 210. When power is not supplied to the cluster 222-1 of such an analog scheme (e.g., when the vehicle 210 is ignition off), as shown in 33 of FIG. 3E, content may fail to be displayed on the display 300 of the cluster and the mechanical gauge(s) 311, 312, 313, and/or 316 may be located at reference position(s) (e.g., 0-point setting). Furthermore, when power is supplied to the cluster 222-1 (e.g., when the vehicle 210 is ignition on), as shown in 34 of FIG. 3E, the mechanical gauge(s) 311, 312, 313, and/or 316 may move from the reference position(s) based on the driving of the vehicle 210 and/or the state of the vehicle 210 and the warning information 304 (e.g., the airbag error warning, the seat belt wearing warning, the battery discharging warning, the engine warning, the door opening warning, or the like) and the mileage information 305 (e.g., the accumulated mileage, the drivable distance, or the like) may be displayed on the display 300 of the cluster 222-1.

Furthermore, according to an embodiment, as shown in FIG. 3B, the display module 222 according to various embodiments may include at least one of a center information display 222-2 provided in the vehicle 210, a head-up display 222-3, a side mirror display 222-4, a room mirror display 222-5, or a headrest display 222-6 (e.g., a rear-seat entertainment display).

Furthermore, at least some of the various pieces of information may be displayed in a form different from the above-mentioned visual information. For example, at least some of the various pieces of information may be output in an audible form. In this case, the electronic device 220 may further include a sound output module (e.g., a sound output module 155 of FIG. 1) configured to output a sound signal to the outside of the electronic device 220.

According to various embodiments, the communication module 223 (e.g., the communication circuit or a communication device) may establish a wired or wireless communication channel between the electronic device 220 and the external device 230 and may assist in performing communication over the established communication channel. Furthermore, the communication module 223 may assist in performing communication between another component (e.g., an electronic control unit) in the vehicle 210 and the electronic device 220. For example, the communication module 223 may include a wireless communication circuit (e.g., a cellular communication circuit or a short range wireless communication circuit) or a wired communication circuit (e.g., a local area network (LAN) communication circuit or a power line communication circuit).

According to various embodiments, the sensor module 224 (e.g., a sensor or a sensor device) may sense (or detect) a state of the vehicle 210 and may generate an electrical signal or a data value corresponding to the sensed state. According to an embodiment, the sensor module 224 may be composed of at least one sensor configured to sense information associated with driving of the vehicle 210 and/or information associated with a state of the vehicle 210. For example, the sensor module 224 may include at least one of a steering angle sensor, a wheel speed sensor, a yaw rate sensor, a global positioning system (GPS) sensor, a lateral acceleration sensor, or a lane recognition sensor. Furthermore, the sensor module 224 may include an on-board diagnostic.

However, this is merely illustrative and various embodiments are not limited thereto. For example, the sensor module 224 may include various types of sensors (e.g., radio detection and ranging (RADAR), light detection and ranging (LiDAR), a camera, an ultrasonic sensor, and/or a laser scanner) capable of sensing an obstacle located around the vehicle 210 and obtaining information about a distance and/or a relative speed of the obstacle, a type (e.g., another vehicle, a pedestrian, a bicycle, and/or a motorcycle) of the obstacle. Furthermore, the various sensors configured to sense a state of an occupant may be provided as the configuration of the sensor module 224. In this case, the data obtained based on the sensor module 224 may be used to track a line of sight of the driver and/or a face of the driver to determine a gaze direction and/or a face direction of the driver. For example, the sensor module 224 may include a sensor (e.g., an eye-tracking sensor) configured to obtain gaze information of the occupant.

According to various embodiments, the vehicle control device 226 may include at least one control device for controlling the vehicle 210. According to an embodiment, the vehicle control device 226 may include at least one of a manipulation control device, a driving control device, or a braking control device.

For example, the manipulation control device may receive a user input for driving. According to an embodiment, the manipulation control device may include a steering input device (e.g.., a steering wheel), an acceleration input device (e.g., an acceleration pedal), and a brake input device (e.g., a brake pedal).

For example, the driving control device may generate a power source associated with driving of the vehicle 210. According to an embodiment, the driving control device may include an engine and/or a motor. For example, power generated by the driving control device may be delivered to an axle via a transmission and a differential gear device. Thus, as drive wheels rotate by the axle, the vehicle 210 may drive. As the transmission, the differential gear device, the axle, and the drive wheel are well known in many documents, a detailed description thereof will be omitted in the present disclosure.

For example, the braking control device may perform control for a brake apparatus in the vehicle 210. According to an embodiment, the braking control device may control operations of brakes respectively arranging on a plurality of drive wheels to perform adjustment (e.g., deceleration adjustment) of a speed of the vehicle 210.

However, this is merely illustrative and various embodiments are not limited thereto. For example, at least one other control device (e.g., advanced driver assistance systems) except for the above-mentioned control device may be configured as the vehicle control device 226.

According to various embodiments, the processor 225 may be operatively connected with the memory 221, the display module 222, the communication module 223, the sensor module 224, and the vehicle control device 226 and may control various embodiments (e.g., hardware or software components) of the electronic device 220.

According to an embodiment, the processor 225 may interwork with the external device 230 to transmit and receive various pieces of content. Furthermore, the processor 225 may generate content associated with an event which occurs in the external device 230. In this regard, the processor 225 may analyze information associated with the event received from the external device 230 and may generate various pieces of content based on at least a portion of the analyzed result. For example, the processor 225 may display the various pieces of content generated based on the event received from the external device 230 or occurring in the external device 230 on the display module 222 provided in the vehicle 210. For example, the content may be displayed on the cluster 222-1 of the vehicle 210.

Various pieces of information may be displayed on the cluster 222-1. For example, as described with reference to FIG. 3A, the information associated with the driving of the vehicle 210 and/or the state of the vehicle 210, such as the engine RPM information 301, the driving speed information 302, the temperature (e.g., coolant temperature) information 303, the warning information 304 (e.g., the airbag error warning, the seat belt wearing warning, the battery discharging warning, the engine warning, the door opening warning, or the like), the mileage information 305 (e.g., the accumulated mileage, the drivable distance, or the like), and/or the fuel information 306, may be displayed on the cluster 222-1.

The above-mentioned information associated with the driving of the vehicle 210 and/or the state of the vehicle 210 is associated with safely of the driver, which needs to ensure its output in a certain level without being hindered by the displaying of content. In this regard, the processor 225 may display content on one area of the cluster 222-1 such that information displayed on the cluster 222-1 is not hindered.

According to an embodiment, as shown in FIG. 4A, content may be displayed on one area 400 of the display 300 provided in the cluster 222-1, which does not interfere with (e.g., does not overlay with) the information associated with the driving of the vehicle 210 and/or the state of the vehicle 210. In a description below, the one area 400 of the display 300 provided in the cluster 222-1 on which the content is displayed may be referred to as a content output area.

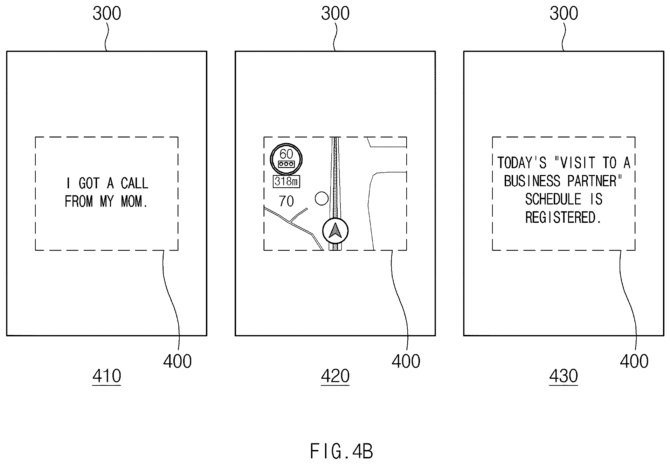

According to an embodiment, substantially the same screen as a screen displayed on a display module of the external device 230 or notification information indicating an event occurring in the external device 230 may be displayed on the content output area 400. For example, as shown in 410 of FIG. 4B, the processor 225 may display a call reception notification (e.g., icon and/or text information indicating call reception) output from the external device 230 on the content output area 400.

Furthermore, the processor 225 may display a portion of content associated with an application which is running in the external device 230 on the content output area 400. For example, when a map application is running in the external device 230, as shown in 420 of FIG. 4B, the processor 225 may display a movement route to a destination on the content output area 400. Furthermore, when a message for providing a notification of a specified schedule is output from the external device 230, as shown in 430 of FIG. 4B, the processor 225 may display content for providing the notification of the specified schedule on the content output area 400.

However, this is merely illustrative and various embodiments are not limited thereto. For example, the content output area 400 according to various embodiments may overlap with at least a portion of the information associated with the driving of the vehicle 210 and/or the state of the vehicle 210. In this case, making brightness of the information associated with the driving of the vehicle 210 and/or the state of the vehicle 210 and brightness of the content different from each other may facilitate identification for the information associated with the driving of the vehicle 210 and/or the state of the vehicle 210.

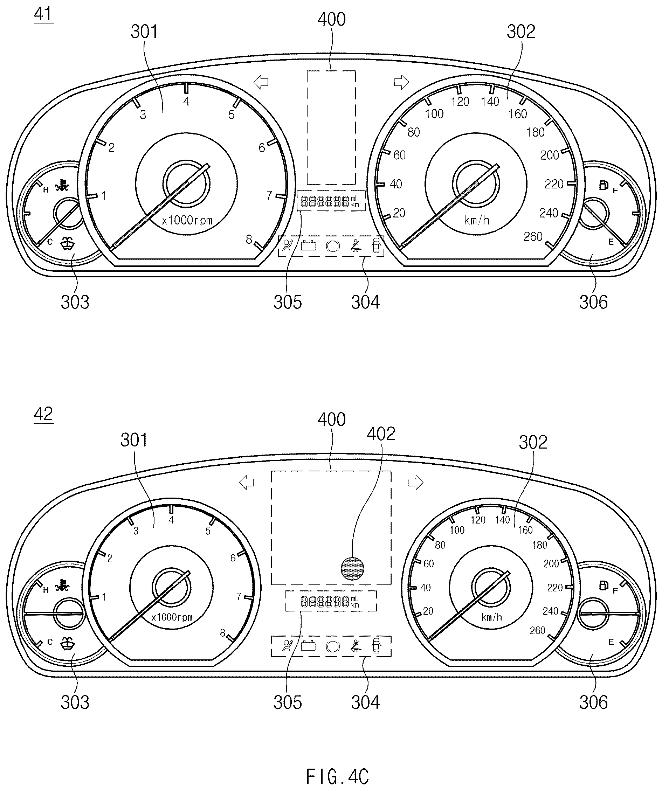

As another example, the content output area 400 may be enlarged or reduced or may move to another area, based on the information associated with the driving of the vehicle 210 and/or the state of the vehicle 210, which is displayed on the cluster 222-1. For example, when the amount of the information (or the magnitude of the information) displayed on the cluster 222-1 (e.g., an area except for the content output area 400) is greater than or equal to a certain level, as shown in 41 of FIG. 4C, the content output area 400 may be reduced in size or the position of the content output area 400 may change to another position. For example, when the number of the pieces of information displayed on the cluster 222-1 (e.g., the area except for the content output area 400) is less than the certain level, as shown in 42 of FIG. 4C, the content output area 400 may be enlarged in size within a range which does not overlap with the displayed information.

As another example, a partial area in the cluster 222-1 (e.g., the display 300) on which the information associated with the driving of the vehicle 210 and/or the state of the vehicle 210 is displayed based on the content displayed on the cluster 222-1 may also be enlarged and/or reduced or may move to another area. For example, when the amount of the content displayed on the content output area 400 is greater than or equal to the certain level, the area on which the information associated with the driving of the vehicle 210 and/or the state of the vehicle 210 is displayed may change in size and/or position.

Additionally or alternatively, the processor 225 according to various embodiments may determine a gaze direction and/or a face direction of the driver based on the data obtained based on the sensor module 224 and may provide the determined result via a portion of the content output area 400. For example, as shown in FIG. 4C, a visual indicator 402 may be displayed as at least a portion of the determined result. The display position of such a visual indicator 402 may change in response to the gaze direction and/or the face direction of the driver.

As described above, the processor 225 according to various embodiments may display the content on the content output area 400 which does not interfere with the information associated with the driving of the vehicle 210 and/or the state of the vehicle 210 to ensure the displaying of the information associated with the driving of the vehicle 210 and/or the state of the vehicle 210, thus reducing an accident risk of the driver.

However, when the content is displayed on the content output area 400 in a driving state, as the attention of the driver may be focused on the content output area 400, this may lead to the risk of accident. The processor 225 according to various embodiments may prevent the attention of the driver from focusing on the content area and consequentially, may reduce the risk of accident.

According to various embodiments, the processor 225 may make output schemes of the content different from each other based on a driving state of the vehicle 210, as part of preventing the attention of the driver from focusing on the content output area 400.

According to an embodiment, the driving state of the vehicle 210 may be associated with a driving speed of the vehicle 210. For example, the driving state of the vehicle 210 may include a first state in which the driving speed is greater than a specified range (e.g., 50 km/h) and a second state in which the driving speed is not greater than the specified range. However, this is merely illustrative and various embodiments are not limited thereto. For example, the driving state of the vehicle 210 may be divided into one state or three or more state, depending on the driving speed of the vehicle 210. Furthermore, the driving state of the vehicle 210 may include a stop state (or a parking state) in which the vehicle 210 does not substantially drive.

For example, the processor 225 may make amounts of content (e.g., an amount of information) displayed according to the driving state of the vehicle 210 different from each other, as part of the operation of making the output schemes of the content different from each other.

According to an embodiment, when the state of the vehicle 210 is identified (or determined) as the first state, the processor 225 may determine an amount of the displayed content as a first level. Furthermore, when the state of the vehicle 210 is identified as the second state, the processor 225 may determine the amount of the displayed content as a second level greater than (or smaller than) the first level. This is to display content in a level different from the second state in which the driver drives at a relatively low speed (e.g., display a small amount of content) such that the driver focuses on driving in the first state in which the driver drives at a relatively high speed.

Additionally or alternatively, in determining the output scheme of the content, the processor 225 may additionally consider at least one of a driving mode of the vehicle 210 (e.g., whether advanced driver assistance systems operate), a type (e.g., a highway, a general road, an overpass, a tunnel, and/or an underpass) of a road on which the vehicle 210 is driving, weather information, road conditions (e.g., accident conditions, construction conditions, and/or rally conditions), traffic conditions (e.g., traffic congestion conditions and/or smooth traffic conditions), a driving time (e.g., an attendance time, a quitting time, a total driving time, and/or a time left to destination), or a surrounding obstacle (e.g., another vehicle, a pedestrian, a road facility, and/or a building).

For example, as described above, furthermore, when the state of the vehicle 210 is identified as the second state (e.g., less than 50 km/h), the processor 225 may determine the amount of the displayed content as a second level greater than the first level. However, when the state of the vehicle 210 is identified as the second state, but if it is identified that there is an obstacle around the vehicle 210, the processor 225 may determine the amount of the displayed content as the first level smaller than the second level. Thus, the driver may focus on driving while paying attention to the surrounding obstacle even in a situation in which the vehicle 210 drives at a relatively low speed.

However, this is merely illustrative and various embodiments are not limited thereto. For example, the processor 225 may make display sizes of the content different from each other, based on the driving state of the vehicle 210, as part of the operation of making the output schemes of the content different from each other.

It will be described in detail below with reference to FIGS. 5A and 5B, in connection with the operation of making the above-mentioned output schemes of the content different from each other.

As shown in FIG. 5A, an event (e.g., running of a message application) associated with message reception may occur in the external device 230. In response to such an event, a message window 500 may be displayed on the display module of the external device 230. According to an embodiment, the message window 500 may include contents 501 of a message received from a party (e.g., a mom). Furthermore, the message window 500 may include a message transmission and reception history 503 with the party (e.g., message contents previously transmitted to the party and message contents previously received from the party).

In this regard, the processor 225 may receive content associated with the message window 500 from the external device 230 and may display the received content on the cluster 222-1 (e.g., the content output area 400).

For example, when the state of the vehicle 210 is the first state in which the vehicle 210 drives at the relatively high speed, as shown in 510 of FIG. 5B, the processor 225 may display content of the first level for providing a notification of reception of the message. According to an embodiment, the content 511 of the first level may include identification information (e.g., a name and/or a phone number) about the other party.

For another example, when the state of the vehicle 210 is the second state in which the vehicle 210 drives at the relatively low speed, as shown in 520 of FIG. 5B, the processor 225 may display content 521 of the second level, which includes more pieces of information than the content of the first level. According to an embodiment, the content 521 of the second level may include at least some of contents of the received message (e.g., some contents corresponding to a specified letter number). For example, the at least some of the contents of the received message may be displayed together with the identification information about the other party.

For another example, when the state of the vehicle 210 is the stop state in which the vehicle 210 does not substantially drive, as shown in 530 of FIG. 5B, the processor 225 may display content 531 of a third level, which includes more pieces of information than the content of the second level. According to an embodiment, the content 531 of the third level may include at least some of the contents of the received message and the message transmission and reception history with the other party. However, this is merely illustrative and various embodiments are not limited thereto. For example, as shown in 540 of FIG. 5B, at least a portion 541 of the content of the third level may be provided as 3-dimensional information with a different depth from another portion.

As described above, the processor 225 according to various embodiments may make the output schemes of the content different from each other, based on the driving state of the vehicle 210, thus preventing the attention of the driver from focusing on the content output area 400.

However, it may be unnecessary to display the content on the vehicle 210 in a state in which the driver does not intend (e.g., request) to display the content. In this regard, the processor 225 according to various embodiments may identify intention of the driver and may display the content on the content output area 400 or may prevent the content being displayed, based on the determined result.

Various embodiments, the processor 225 may display an indicator for providing a notification that the content is received from the external device 230 on the cluster 222-1, as part of identifying the intention of the driver.

For example, as shown in 610 of FIG. 6A, an event associated with message reception may occur in the external device 230. Furthermore, the external device 230 may transmit content for providing a notification of the occurrence of the event to the electronic device 220. Thus, as shown in 620 of FIG. 6A, the processor 225 may display an indicator 601 for providing a notification that content is received from the external device 230 on a portion (e.g., a portion of a lower side) of the content output area 400. According to an embodiment, the indicator 601 may be provided as various graph effects.

However, this is merely illustrative and various embodiments are not limited thereto. For example, the indicator 601 may be output as audible information with a form different from visual information (e.g., an acoustic signal for querying about displaying content on the cluster 222-1).

Furthermore, the indicator 601 may be displayed on another display module (e.g., a center information display 222-2), rather than the cluster 222-1.

In this regard, the processor 225 may additionally consider whether a passenger rides, in displaying the indicator 601 on the other display module. For example, there is a risk that personal information will be exposed in a state in which the driver and the passenger ride together. Thus, when the riding of the passenger is detected, the processor 225 may display the indicator 601 on the cluster 222-1 which is not relatively exposed via a line of sight of the passenger. Furthermore, when the riding of the passenger is not detected, the processor 225 may display the indicator 601 on the other display module.

According to an embodiment, the processor 225 may determine whether the driver intents to display content, based on the line of sight of the driver.

According to an embodiment, when the line of sight of the driver gazing at the indicator 601 is not detected, the processor 225 may determine that the driver does not intent to display the content. Furthermore, when detecting the line of sight of the driver gazing at the indicator 601, the processor 225 may determine that the driver intents to display the content. According to an embodiment, when detecting the line of sight of the driver gazing at the indicator 601, the processor 225 may display a visual indicator 402 corresponding to the line of sight of the user on the indicator 601.

In this regard, the processor 225 may analyze a gaze direction of the driver based on data obtained based on the sensor module 224. For example, the processor 225 may analyze an image obtained based on a camera (e.g., a camera module 180) to determine a direction a body's portion (e.g., a face and/or eyes) is facing as the gaze direction. However, this is merely illustrative and various embodiments are not limited thereto. For example, the processor 225 may apply various well-known methods in determining the gaze direction.

According to an embodiment, when the line of sight of the driver gazing at the indicator 601 is not detected, as shown in 630 of FIG. 6A, the processor 225 may stop displaying the indicator 601. Furthermore, when the line of sight does not gaze at the indicator 601 during a certain time although the line of sight of the driver gazing at the indicator 601 is detected, the processor 225 may stop displaying the indicator 601. For example, the processor 225 may prevent the content being displayed on the content output area 400.

According to an embodiment, when detecting the line of sight of the driver gazing at the indicator 601, as shown in 640 of FIG. 6A, the processor 225 may generate a content layer 603 for displaying content. For example, the content layer 603 may be generated in the content output area 400. The content associated with the event (e.g., the message reception) occurring the external device 230 may be displayed on the content layer 603.

According to various embodiments, as shown in FIG. 6B, the processor 225 may determine an output scheme of content based on data 660 obtained based on the sensor module 224 and the outside (e.g., a server). For example, the data obtained based on the sensor module 224 may be associated with at least one of a line of sight 600 of the driver gazing at the indicator 601 or driving of the vehicle 210. Furthermore, the data obtained from the outside may be associated with at least one of weather information, traffic conditions, or road conditions.

According to an embodiment, when the data 660 obtained based on the sensor module 224 and the outside corresponds to the first state in which a specified condition is met (e.g., the first state in which the vehicle 210 drives at a relatively high speed), the processor 225 may select a first output scheme for generating and outputting first content 670-1. The first content 670-1 may be composed of information of the first level (e.g., caller identification information including a name and/or a phone number). For example, the processor 225 may display the first content 670-1 on one content layer.

According to an embodiment, when the data 660 obtained based on the sensor module 224 and the outside corresponds to the second state in which the specified condition is met (e.g., the second state in which the vehicle 210 drives at a constant speed), the processor 225 may select a second output scheme for generating and outputting second content 670-2. The second content 670-2 may be composed of information of the second level greater than the first level (e.g., caller identification information and some contents of the received message). For example, the processor 225 may display the second content on one content layer.

According to an embodiment, when the data 660 obtained based on the sensor module 224 and the outside corresponds to a third state in which the specified condition is met (e.g., the third state in which the vehicle 210 drives at a relatively low speed), the processor 225 may select a third output scheme for generating and outputting third content 670-3. The third content 670-3 may be composed of information of a third level greater than the second level (e.g., caller identification information and all contents of the received message) and at least a portion thereof may be composed of 3-dimensional information. For example, the processor 225 may display the third content 670-3 on a plurality of content layers. For example, as shown in FIG. 6C, a plurality of content layers 680 forming the third content 670-3 may include a first content layer 681 including a background effect, a second content layer 683 including an emoticon and/or avatar (683-5) effect, and a third content layer 685 composed of text.

According to an embodiment, the second content layer 683 may include at least one emoticon and/or avatar (683-5) effect corresponding to contents of the event (e.g., contents of a received message) occurring in the external device 230. For example, when a message including the text, "I've arrived", and a "wink" emoticon is received in the external device 230, the processor 225 may separate the wink emoticon 638-5 from the message received in the external device 230, may generate the second content layer 683-1 obtained by combining it with a shadow which is a 3D effect, and may use it to generate the third content 670-3. Furthermore, the processor 225 may generate the second content layer 683-3 obtained by resizing and animating the emoticon 683-5 and may use it to generate the third content 670-3.

According to an embodiment, the third content layer 685 may be displayed as an upper layer such that a text portion is more visible. Furthermore, various effects (e.g., scrolling and/or slopingness) may be additionally applied to the third content layer 685, depending on the amount of text. However, this is merely illustrative and various embodiments are not limited thereto.

According to various embodiments, the processor 225 may make attributes of the indicator 601 different from each other, based on an attribute of content received from the external device 230 (e.g., content to be displayed on the vehicle 210). The attribute of the content may be associated with a priority and the attribute of the indicator 601 may be associated with a color.

According to an embodiment, as shown in 710 and 720 of FIG. 7, the processor 225 may differently set a color of the indicator 601 for content corresponding to a first priority and a color of the indicator 601 for content with a second priority. Thus, the driver may easily determine whether to display content on the vehicle 210, based on the attribute of the indicator 601.

For example, the priority of the content may be specified by the user or may be determined based on a priority of an application (e.g., a message application and/or an e-mail application) associated with the content. For example, an application for providing disaster information or a call application may have a higher priority than another application.

However, changing the color of the indicator 601 based on the priority of the content is an embodiment and various embodiments are not limited thereto. For example, the attribute of the content may include a color of an icon of an application associated with the content. Furthermore, as shown in 730 of FIG. 7, a display size of the indicator 601 may be differently set based on the attribute of the content. As shown in 740 of FIG. 7, a display position of the indicator 601 may be differently set based on the attribute of the content.

According to various embodiments, the processor 225 may make attributes of the content layer 603 different from each other, based on an attribute of content received from the external device 230 (e.g., content to be displayed on the vehicle 210). The attribute of the content may be associated with a priority and the attribute of the content layer 603 may be associated with a color.

According to an embodiment, as shown in 810 and 820 of FIG. 8, the processor 225 may differently set a color of the content layer 603 for content corresponding to a first priority and a color of the content layer 603 for content with a second priority. Thus, the driver may easily recognize a priority of the content displayed on the vehicle 210, based on the attribute of the content layer 603.

Furthermore, as shown in 830 of FIG. 8, a display position of the content layer 603 may be differently set based on the attribute of the content. Additionally or alternatively, the processor 225 may additionally consider a gaze direction of the driver or a pose of the driver, in differently setting the display position of the content layer 603. For example, the processor 225 may set one area corresponding to the line of sight of the driver in an empty space of the cluster 222-1 on which the information associated with the driving of the vehicle 210 and/or the state of the vehicle 210 is not displayed as the content output area 400. In this regard, the processor 225 may obtain a physical feature (e.g., a height and/or a gender) from the driver. The above-mentioned gaze direction of the driver or the pose of the driver may be used to determine the position of the indicator 601 described with reference to FIG. 7.

The attributes of the indicator 601 and the content layer 603 according to various embodiments may be determined based on the driving state of the vehicle 210. According to an embodiment, when the state of the vehicle 210 is identified as the first state, the processor 225 may assign a first attribute to at least one of the attribute of the indicator 601 or the attribute of the content layer 603. Furthermore, when the state of the vehicle 210 is identified as the second state, the processor 225 may assign a second attribute different from the first attribute to at least one of the attribute of the indicator 601 or the attribute of the content layer 603.

An electronic device 220 according various embodiments may include a communication module 223 configured to establish communication with an external device 230, an eye-tracking sensor 224 configured to obtain gaze information of an occupant, a display module 222, and a processor 225 operatively connected with the communication module 223, the eye-tracking sensor 224, and the display module 222. According to an embodiment, the processor 225 may be configured to display a screen including driving information (301 to 306) associated with a vehicle 210 on the display module 222 based on obtaining the driving information (301 to 306), display an indicator 601 associated with a notification received from the external device 230, on a specified area of the display module 222, when the gaze information obtained based on the eye-tracking sensor 224 corresponds to a line of sight gazing at the specified area of the display module 222, determine a display method of content corresponding to the notification based on the driving information (301 to 306), and display the content on the display module 222 based on the determined display method.

According to various embodiments, the processor 225 may be configured to, when the gaze information obtained based on the eye-tracking sensor 224 does not correspond to the line of sight gazing at the specified area of the display device 222, prevent the content being display on the display module 222.

According to various embodiments, the processor 225 may be configured to, when the driving information (301 to 306) corresponds to a specified first state, display the content using a first scheme and, when the driving information (301 to 306) corresponds to a specified second state, prevent the content being displayed or display the content using a second scheme different from the first scheme. For example, the first scheme may determine at least one of an amount of the content output through the display (222), a display format of the content, or a three-dimensional effect of the content as a first level. For example, the second scheme may determine at least one of the amount of the content output through the display (222), the display format of the content, or the three-dimensional effect of the content as a second level greater than the first level.

According to various embodiments, the processor 225 may be configured to determine whether the driving information (301 to 306) corresponds to the specified first state or the specified second state based on at least one of a driving mode of the vehicle 210, a type of a road on which the vehicle 210 is driving, obstacles around the vehicle 201, weather information, road conditions, traffic conditions, or a driving time.

According to various embodiments, the processor 225 may be configured to determine the display method of the content based on whether the display module 222 provides 2-dimensional information or 3-dimensional information.

According to various embodiments, the processor 225 may be configured to determine an attribute of the indicator 601 based on the driving information.

According to various embodiments, the processor 225 may be configured to determine an attribute of the indicator based on an attribute of the notification received from the external device 230.

According to various embodiments, the attribute of the indicator 601 may include at least one of a display color, a display size, or a display position.

According to various embodiments, the processor 225 may be configured to, when the gaze information obtained based on the eye-tracking sensor 224 does not correspond to the line of sight gazing at the specified area of the display module 222, maintain the displaying of the indicator 601 during a specified time.

According to various embodiments, the processor 225 may be configured to detect a line of sight gazing at the content while the content is displayed on the display module 222 and, when the line of sight gazing at the content is not detected, stop displaying the content.

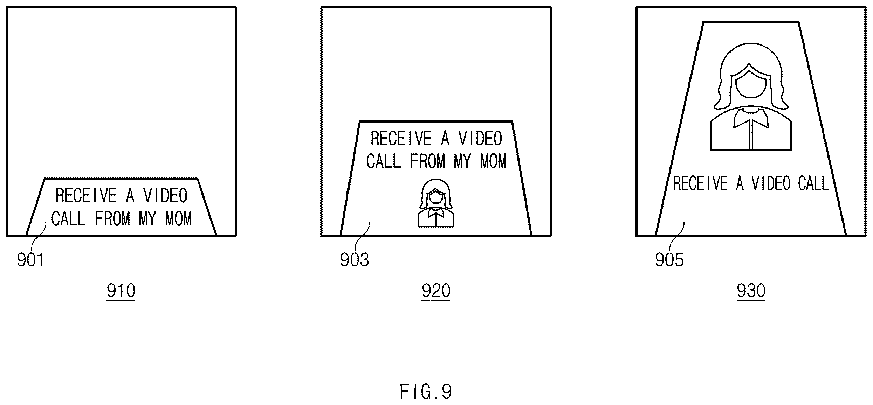

Hereinafter, a description will be given of various pieces of content displayed on the electronic device 220 according to various embodiments with reference to FIGS. 9 to 12.

FIG. 9 is a drawing for describing an operation of displaying content associated with receiving a video call in an electronic device 220 according to various embodiments.

Referring to FIG. 9, the electronic device 220 according to various embodiments may display content associated with receiving a video call on a vehicle 210. According to an embodiment, the electronic device 220 may display an indicator 601 for providing a notification of reception of the video call and may display content when a line of sight gazing at the indicator 601 is detected.

According to an embodiment, when the vehicle 210 drives at a speed corresponding to a first state (e.g., a speed greater than 50 km/h), as shown in 910 of FIG. 9, the electronic device 220 may display first content 901 corresponding to a call reception notification. The first content 901 may include identification information (e.g., a name and/or a phone number) about the other party. For example, the first content 901 may be displayed at a first size.

According to an embodiment, when the vehicle 210 drives at the speed corresponding to the first state, the electronic device 220 may prevent the first content being displayed such that a driver is able to focus on driving. At this time, the electronic device 220 may maintain the displaying of the indicator 601 to providing a notification of presence of content to be displayed. Additionally or alternatively, the electronic device 220 may apply a specified effect to the indicator 601 based on content to be displayed on the vehicle 210. For example, the more the content which is not identified by the driver increases in number, the more the electronic device 220 may increase a size (or thickness of a border) of the indicator 601.

According to an embodiment, when the vehicle 210 drives at a speed corresponding to a second state (e.g., a speed less than 50 km/h), as shown in 920 of FIG. 9, the electronic device 220 may display second content 903 corresponding to the call reception notification. The second content 903 may include the identification information about the other party, but may be displayed at a second size greater than the first size. Additionally or alternatively, the electronic device 220 may provide more pieces of information (e.g., other party image information), in displaying the second content 903.

According to an embodiment, when the vehicle 210 is in a stop state (or a parking state) in which it does not substantially drive, as shown in 930 of FIG. 9, the electronic device 220 may display third content 905 corresponding to the call reception notification. The third content 905 may include the identification information about the other party, but may be displayed at a third size greater than the second size. Additionally or alternatively, the electronic device 220 may provide more pieces of information (e.g., call history information with the other party), in displaying the third content 905.

However, this is merely illustrative and various embodiments are not limited thereto. For example, the first content 901 to the third content 903 may be divided into different colors other than sizes.

As described above, the electronic device 220 may determine an output scheme of content with regard to a driving state of the vehicle 210. Additionally or alternatively, the electronic device 220 according to various embodiments may additionally consider at least one of a driving mode of the vehicle 210 (e.g., whether advanced driver assistance systems operate), weather, road conditions, traffic conditions, a driving time, or a surrounding obstacle, in determining the output scheme of the content.

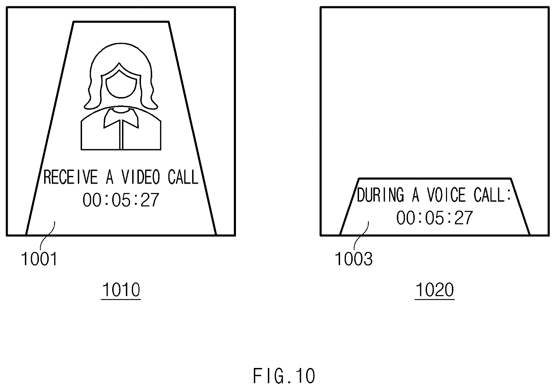

FIG. 10 is a drawing for describing an operation of displaying content associated with performing a video call in an electronic device 220 according to various embodiments.

Referring to FIG. 10, the electronic device 220 according to various embodiments may perform a call connection in response to reception of a video call. For example, the electronic device 220 may display content associated with the video call on a vehicle 210.

According to an embodiment, when the vehicle 210 drives at a speed corresponding to a second state (e.g., a speed less than 50 km/h), as shown in 1010 of FIG. 10, the electronic device 220 may display first content 1001 composed of image data and audio data provided from the other party on the vehicle 210.

According to an embodiment, when the vehicle 210 drives at a speed corresponding to a first state (e.g., a speed greater than 50 km/h), as shown in 1020 of FIG. 10, the electronic device 220 may prevent the image data provided from the other party and may display second content 1003 associated with the audio data. In this regard, the electronic device 220 may stop performing the video call and may switch to performing a voice call.

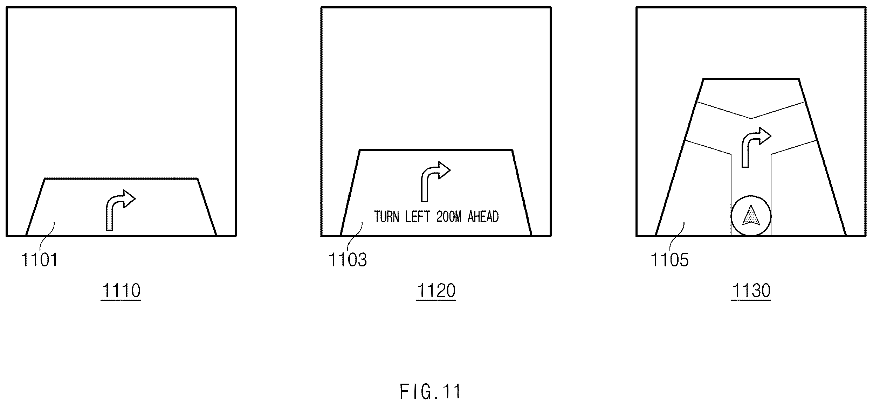

FIG. 11 is a drawing for describing an operation of displaying content associated with an execution screen of a map application in an electronic device 220 according to various embodiments.

Referring to FIG. 11, the electronic device 220 according to various embodiments may display the content associated with the execution screen of the map application on the vehicle 210. For example, the electronic device 220 may display a movement route to a destination on the vehicle 210.

According to an embodiment, when the vehicle 210 drives at a speed corresponding to a first state (e.g., a speed greater than 50 km/h), as shown in 1110 of FIG. 11, the electronic device 220 may display first content 1101 composed of a road sign. for example, the first content 1101 may include at least one of speed limit information, movement direction information, or road name information.

According to an embodiment, when the vehicle 210 drives at a speed corresponding to a second state (e.g., a speed less than 50 km/h), as shown in 1120 of FIG. 11, the electronic device 220 may display second content 1103 composed of a road sign and additional information. For example, the additional information may include text information for providing additional information about a movement route.

According to an embodiment, when the vehicle 210 is in a stop state (or a parking state) in which it does not substantially drive, as shown in 1130 of FIG. 11, the electronic device 220 may display third content 1105 composed of map information. For example, the third content 1105 may be map information corresponding to a certain radius on the basis of a current location of the vehicle 210. Additionally or alternatively, the third content may be map information, at least a portion of which is enlarged or at least a portion of which is represented as 3-dimensional information.

According to an embodiment, the electronic device 220 may additionally consider at least one of a driving mode, a type of a road on which the vehicle 210 is driving, weather information, road conditions, traffic conditions, a driving time, or a surrounding obstacle, in determining the situation in which the third content is displayed. For example, the electronic device 220 may display the third content 1105, for at least one of a situation in which the vehicle 210 deviates from a specified route while driving in the first state or the second state or a situation in which the vehicle 210 drives on a road on which an accident occurs in the first state or the second state or construction progresses.

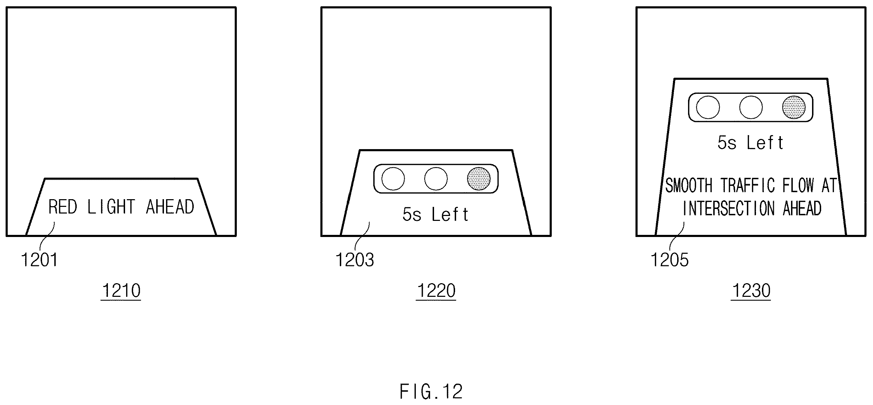

FIG. 12 is a drawing for describing an operation of displaying content associated with traffic information in an electronic device 220 according to various embodiments.

Referring to FIG. 12, the electronic device 220 according to various embodiments may display content associated with traffic information on a vehicle 210. For example, the electronic device 220 may display a lighting time of traffic lights arranged at an intersection ahead on the vehicle 210.

According to an embodiment, when the vehicle 210 drives at a speed corresponding to a first state (e.g., a speed greater than 50 km/h), as shown in 1210 of FIG. 12, the electronic device 220 may display first content 1201 including information about a lighting time of traffic lights arranged at the intersection ahead. For example, the first content 1201 may be text information. Furthermore, the first content 1201 may be displayed at a first size.

According to an embodiment, when the vehicle 210 drives at a speed corresponding to a second state (e.g., a speed less than 50 km/h), as shown in 1220 of FIG. 12, the electronic device 220 may display second content 1203 including a traffic light image and a time when lighting is maintained. For example, the second content 1203 may be displayed at a second size greater than the first size.

According to an embodiment, when the vehicle 210 is in a stop state in which it does not substantially drive, as shown in 1230 of FIG. 12, the electronic device 220 may display third content 1205 which additionally includes information associated with traffic conditions. For example, the third content 1205 may be displayed at a third size greater than the second size.

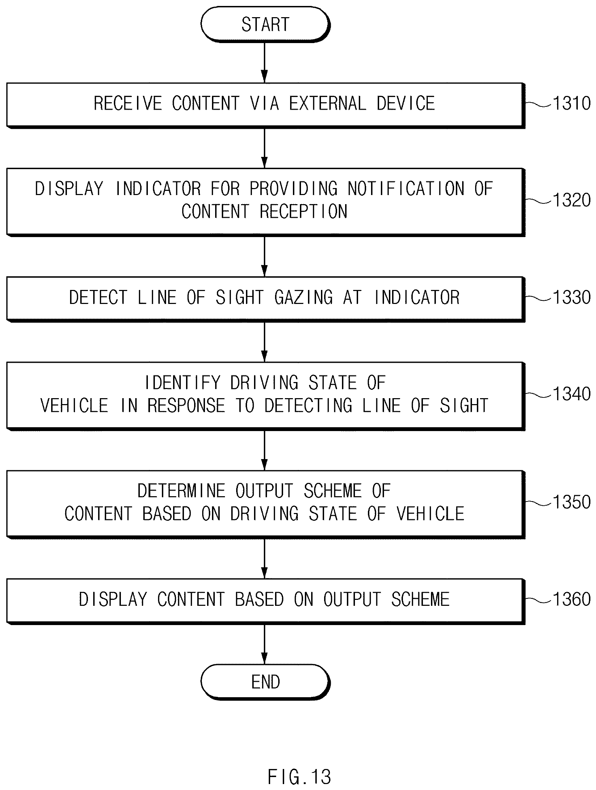

Hereinafter, a description will be given in detail of a content output method according to various embodiments with reference to FIGS. 13 to 14B.

FIG. 13 is a flowchart for describing an operation of displaying content in an electronic device 220 according to various embodiments. Respective operations in an embodiment below may be sequentially performed, but are not necessarily sequentially performed. For example, an order of the respective operations may be changed and at least two operations may be performed in parallel. Furthermore, at least one of operations below may be omitted according to an embodiment.

Referring to FIG. 13, in operation 1310, an electronic device 220 (e.g., a processor 225) according to various embodiments may receive content via an external device 230. According to an embodiment, the content may include at least one of image data, text data, video data, audio data, or symbol data.

According to various embodiments, in operation 1320, the electronic device 220 (e.g., the processor 225) may display an indicator 601 for providing a notification of the content reception. According to an embodiment, the electronic device 220 may display the indicator 601 with an attribute corresponding to an attribute of the content. In this regard, the description associated with FIGS. 4A, 6A, and 7 may be referenced.

According to various embodiments, in operation 1330, the electronic device 220 (e.g., the processor 225) may detect a line of sight gazing at the indicator 601. According to an embodiment, the electronic device 220 may determine a direction a body part (e.g., a face and/or eyes) of a driver is facing based on data (e.g., image data) obtained based on a sensor module 224 (e.g., a camera module 180).

According to various embodiments, in operation 1340, the electronic device 220 (e.g., the processor 225) may identify a driving state of a vehicle 210 in response to detecting the line of sight gazing at the indicator 601. According to an embodiment, the electronic device 220 may identify a driving state of the vehicle 210 as part of the operation of displaying the content on the vehicle 210. Furthermore, when the line of sight gazing at the indicator 601 is not detected, the electronic device 220 may prevent the operation of displaying the content on the vehicle 210.

According to various embodiments, in operation 1350, the electronic device 220 (e.g., the processor 225) may determine an output scheme of the content based on the driving state of the vehicle 210. For example, the electronic device 220 may make amounts of content (e.g., amounts of information) displayed according to the driving state of the vehicle 210 different from each other, as part of the operation of determining the output scheme of the content. For another example, the electronic device 220 may make display sizes of the content different from each other, based on the driving state of the vehicle 210. For another example, the electronic device 220 may process and display the content as different content depending on the driving state of the vehicle 210. In this regard, the description associated with FIGS. 5A and 5B and FIGS 9 to 12 may be referenced.

According to various embodiments, in operation 1360, the electronic device 220 (e.g., the processor 225) may display the content based on the determined output scheme. According to various embodiments, the content may be displayed on one area 400 of a cluster 222-1.

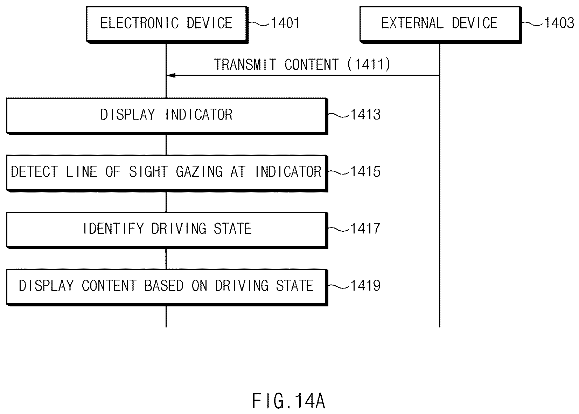

FIG. 14A is a drawing illustrating an operating method of a content output system 200 according to various embodiments. Respective operations in an embodiment below may be sequentially performed, but are not necessarily sequentially performed. For example, an order of the respective operations may be changed and at least two operations may be performed in parallel. Furthermore, at least one of the above-mentioned operations may be omitted according to an embodiment.

Referring to FIG. 14A, the content output system 200 according to various embodiments may be composed of an electronic device 1401 (e.g., an electronic device 220) and an external device 1403 (e.g., an external device 230).

According to various embodiments, in operation 1411, the external device 1403 may transmit content to the electronic device 1401 which interworks. According to an embodiment, the external device 1403 may transmit content associated with occurrence of a specified event to the electronic device 1401. According to another embodiment, the external device 1403 may provide the electronic device 1401 with an execution screen of an application which is running as content.

According to various embodiments, in operation 1413, the electronic device 1401 may display an indicator 601 for providing a notification of content reception. According to an embodiment, the electronic apparatus 1401 may display the indicator 601 on a cluster 222-1 of a vehicle 210. In this case, the electronic device 1401 may display the indicator 601 on one area 400 of the cluster 222-1, which does not interfere with (e.g., does not overlap with) information associated with driving of the vehicle 210 and/or a state of the vehicle 210.

According to various embodiments, in operation 1415, the electronic device 1401 may detect a line of sight gazing at the indicator 601. According to an embodiment, the electronic device 1401 may analyze data obtained based on the sensor module 224 to detect the line of sight of the driver.

According to various embodiments, in operation 1417, the electronic device 1401 may identify a driving state of the vehicle 210. According to an embodiment, the driving state may be divided into a high-speed driving state, a low-speed driving state, and/or a stop state, based on a driving speed. According to another embodiment, the driving state may be divided into traffic congestion conditions and/or congestion solution conditions, based on traffic flow. However, this is merely illustrative and various embodiments are not limited thereto.

According to various embodiments, in operation 1419, the electronic device 1401 may display the content based on the driving state. According to an embodiment, the electronic device 1401 may make output schemes of the content different from each other, depending on the driving state of the vehicle 210.

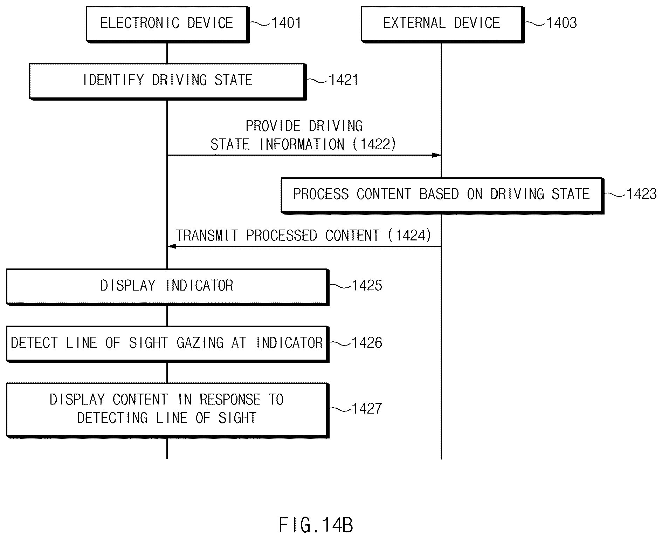

FIG. 14B is a drawing illustrating another operating method of a content output system 200 according to various embodiments. Respective operations in an embodiment below may be sequentially performed, but are not necessarily sequentially performed. For example, an order of the respective operations may be changed and at least two operations may be performed in parallel. Furthermore, at least one of the above-mentioned operations may be omitted according to an embodiment.

Referring to FIG. 14B, the content output system 200 according to various embodiments may be composed of an electronic device 1401 (e.g., an electronic device 220) and an external device 1403 (e.g., an external device 230). Compared with the operating method described with reference to FIG. 14A, the operating method described in FIG. 14B has a difference in terms of processing content based on a driving state of a vehicle 210 in the external device 1043. In this regard, a description will be given in detail based on a description below.

According to various embodiments, in operation 1421, the electronic device 1401 may identify a driving state of the vehicle 210. According to an embodiment, the driving state may be divided into a high-speed driving state, a low-speed driving state, and/or a stop state, based on a driving speed.

According to various embodiments, in operation 1422, the electronic device 1401 may provide the external device 1403 with information associated with the driving state of the vehicle 210. According to an embodiment, the electronic device 1401 may periodically or continuously identify the driving state of the vehicle 210 and may provide the external device 1403 with information associated with it.

According to various embodiments, in operation 1423, the external device 1403 may process content based on the driving state of the vehicle 210. According to an embodiment, the external device 1403 may make amounts of content provided to the electronic device 1401 different from each other, depending on the driving state of the vehicle 210, based on processing the content. Furthermore, as described above, the external device 1403 may make sizes of content displayed on the electronic device 1401 (or the vehicle 210) different from each other, depending on the state of the vehicle 210, based on processing the content.

According to various embodiments, in operation 1424, the external device 1403 may transmit the processed content to the electronic device 1401.

According to various embodiments, in operation 1425, the electronic device 1401 may display an indicator 601 for providing a notification of content reception. According to an embodiment, the indicator 601 may be displayed on a cluster 222-1 of the vehicle 210.

According to various embodiments, in operation 1426, the electronic device 1401 may detect a line of sight gazing at the indicator 601. According to an embodiment, the electronic device 1401 may analyze data obtained based on a sensor module 224 to detect the line of sight of the driver.

According to various embodiments, in operation 1427, the electronic device 1401 may display the content in response to detecting the line of sight. For example, the electronic device 1401 may display the content on the vehicle 210 (e.g., the cluster 222-1).

It is described that the driving state of the vehicle 210 is identified by the electronic device 1401 in the above-mentioned embodiment. This may be regarded as an embodiment for a situation in which the electronic device 1401 has the sensor module 224 (e.g., various types of sensors), sensing performance of which is relatively better.

However, this is merely illustrative and various embodiments are not limited thereto. For example, when the external device 1403 is disposed in the vehicle 210 to have sensing performance of a certain level, the operation of identifying the driving state of the vehicle 210 may be performed by the external device 1403.

An operating method of an electronic device 220 according to various embodiments may include displaying a screen including driving information (301 to 306) associated with a vehicle 210 on a display module 222 of the electronic device 220 based on obtaining the driving information, displaying an indicator 601 associated with a notification received from an external device 230 on a specified area of the display module 222, when gaze information obtained based on an eye-tracking sensor 224 of the electronic device 220 corresponds to a line of sight gazing at the specified area of the display device 222, determining a display method of content corresponding to the notification based on the driving information (301 to 306), and displaying the content on the display module 222 based on the determined display method.

According to various embodiments, the operating method of the electronic device 220 may include, when the gaze information obtained based on the eye-tracking sensor 224 does not correspond to the line of sight gazing at the specified area of the display device 222, preventing the content being display on the display module 222.

According to various embodiments, the operating method of the electronic device 220 may include, when the driving information (301 to 306) corresponds to a specified first state, displaying the content using a first scheme and, when the driving information (301 to 306) corresponds to a specified second state, preventing the content being displayed or displaying the content using a second scheme different from the first scheme. For example, the first scheme may determine at least one of an amount of the content output through the display (222), a display format of the content, or a three-dimensional effect of the content as a first level. For example, the second scheme may determine at least one of the amount of the content output through the display (222), the display format of the content, or the three-dimensional effect of the content as a second level greater than the first level.

According to various embodiments, the operating method of the electronic device 220 may include determining whether the driving information (301 to 306) corresponds to the specified first state or the specified second state based on at least one of a driving mode of the vehicle 210, a type of a road on which the vehicle 210 is driving, obstacles around the vehicle 210, weather information, road conditions, traffic conditions, or a driving time.

According to various embodiments, the operating method of the electronic device 220 may include determining the display method of the content based on whether the display module 222 provides 2-dimensional information or 3-dimensional information.

According to various embodiments, the operating method of the electronic device 220 may include determining an attribute of the indicator 601 based on the driving information (301 to 306).

According to various embodiments, the operating method of the electronic device 220 may include determining an attribute of the indicator 601 based on an attribute of the notification.

According to various embodiments, the attribute of the indicator 601 may include at least one of a display color, a display position or a display size.

According to various embodiments, the operating method of the electronic device 220 may include, when the information obtained based on the eye-tracking sensor 224 does not correspond to the line of sight gazing at the specified area of the display module 222, maintaining the displaying of the indicator 601 during a specified time.

According to various embodiments, the operating method of the electronic device 220 may include detecting a line of sight gazing at the content based on the information obtained based on the eye-tracking sensor 224, while the content is displayed on the display module 222 of the electronic device and, when the line of sight gazing at the content is not detected, stopping displaying the content.

## Claims

1. An electronic device (220), comprising:
a communication circuit (223) configured to establish communication with an external device (230);
a sensor (224) configured to obtain gaze information of an occupant;
a display device (222); and
a processor (225) operatively connected with the communication circuit (223), the sensor (224), and the display device (222),
wherein the processor (225) is configured to:
display a screen including driving information (301 to 306) associated with a vehicle (210) on the display device (222) based on obtaining the driving information (301 to 306);
display an indicator (601) associated with a notification received from the external device (230), on a specified area of the display device (222);
when the gaze information obtained based on the sensor (224) corresponds to a line of sight gazing at the specified area, determine a display method of a content corresponding to the notification based on the driving information (301 to 306); and
display the content on the display device (222) based on the determined display method.

2. The electronic device of claim 1, wherein the processor (225) is configured to:
when the gaze information obtained based on the sensor (224) does not correspond to the line of sight gazing at the specified area of the display device (222), prevent the content being displayed on the display device (222).

3. The electronic device of claim 1, wherein the processor (225) is configured to:
when the driving information (301 to 306) corresponds to a specified first state, display the content using a first scheme; and
when the driving information (301 to 306) corresponds to a specified second state, prevent the content being displayed or display the content using a second scheme different from the first scheme,
wherein the first scheme determines at least one of an amount of the content output through the display (222), a display format of the content, or a three-dimensional effect of the content as a first level, and
wherein the second scheme determines at least one of the amount of the content output through the display (222), the display format of the content, or the three-dimensional effect of the content as a second level greater than the first level.

4. The electronic device of claim 3, wherein the processor (225) is configured to:
determine whether the driving information (301 to 306) corresponds to the specified first state or the specified second state based on at least one of a driving mode of the vehicle (210), a type of a road on which the vehicle (210) is driving, obstacles around the vehicle (210), weather information, road conditions, traffic conditions, or a driving time.

5. The electronic device of claim 1, wherein the processor (225) is configured to:
determine the display method of the content based on whether the display device (222) provides 2-dimensional information or 3-dimensional information.

6. The electronic device of claim 1, wherein the processor (225) is configured to:
determine an attribute of the indicator (601) based on the driving information.

7. The electronic device of claim 1, wherein the processor (225) is configured to:
determine an attribute of the indicator (601) based on an attribute of the notification received from the external device.

8. The electronic device of any one of claims 7 and 8, wherein the attribute of the indicator (601) includes at least one of a display color, a display size, or a display position.

9. The electronic device of claim 2, wherein the processor (225) is configured to:
when the gaze information obtained based on the sensor (224) does not correspond to the line of sight gazing at the specified area, maintain the displaying of the indicator during a specified time.

10. The electronic device of any one of claims 1 and 3, wherein the processor (225) is configured to:
detect a line of sight gazing at the content based on obtained information through sensor (224) while the content is displayed on the display device (222); and
when the line of sight gazing at the content is not detected, stop displaying the content.

11. An operating method of an electronic device (220), the operating method comprising:
displaying a screen including driving information (301 to 306) associated with a vehicle (210) on a display device (222) of the electronic device (200) based on obtaining the driving information (301 to 306);
displaying an indicator (601) associated with a notification received from an external device (230) on a specified area of the display device;
when gaze information obtained based on a sensor (224) of the electronic device (220) corresponds to a line of sight gazing at the specified area, determining a display method of a content corresponding to the notification based on the driving information; and
displaying the content on the display device (222) of the electronic device (200) based on the determined display method.

12. The operating method of claim 11, further comprising:
when the gaze information obtained based on the sensor (224) does not corresponds to the line of sight gazing at the specified area of the display device, preventing the content being displayed on the display device (222) of the electronic device (200).

13. The operating method of claim 11, further comprising:
when the driving information (301 to 306) corresponds to a specified first state, displaying the content using a first scheme; and
when the driving information (301 to 306) corresponds to a specified second state, preventing the content being displayed or displaying the content using a second scheme different from the first scheme,
wherein the first scheme determines at least one of an amount of the content output through the display (222), a display format of the content, or a three-dimensional effect of the content as a first level, and
wherein the second scheme determines at least one of the amount of the content output through the display (222), the display format of the content, or the three-dimensional effect of the content as a second level greater than the first level.

14. The operating method of claim 11, further comprising:
determining an attribute of the indicator (601) based on the driving information (301 to 306).

15. The operating method of claim 11, further comprising:
determining an attribute of the indicator (601) based on an attribute of the notification.
